# EUROPÄISCHE PATENTSCHRIFT

(11) **EP 0 781 701 B1**
(45) Veröffentlichungstag und Bekanntmachung des Hinweises auf die Patenterteilung: **27.02.2002**
(21) Anmeldenummer: 96120972.3
(22) Anmeldetag: 28.12.1996
(51) Int. Cl.: B62J 1/00, B62J 1/28

(54) **Fahrradsattel**
Bicycle saddle
Selle de bicyclette

(30) Priorität: 30.12.1995 DE 29520715 U
(43) Veröffentlichungstag der Anmeldung: 02.07.1997
(73) Patentinhaber: Hölzel, Konrad, 54313 Zemmer (DE)
(72) Erfinder: Hölzel, Konrad, 54313 Zemmer (DE)
(74) Vertreter: Gustorf, Gerhard, Dipl.-Ing.

(56) Entgegenhaltungen:
- AT-B- 366 972
- BE-A- 509 115
- DE-A- 3 625 210
- DE-U- 9 414 922
- US-A- 3 970 345
- US-A- 5 123 698

## Beschreibung

Die Erfindung betrifft einen Sattel für Zweiräder, wie er im Oberbegriff des Anspruchs 1 beschrieben ist.

Bekannte Konstruktionen eines derartigen Fahrradsattels haben den Nachteil, daß sich das Körpergewicht des Fahrers auf einer zu kleinen Sitzfläche abstützt. Ferner wird die Seitenstabilität während der Fahrt im wesentlichen nur über die Arme und den aufgrund seiner Drehbeweglichkeit instabilen Lenker bewirkt. Diese Nachteile sind insbesondere auf längeren Fahrten spürbar, und zwar sowohl bei der alltäglichen Verwendung des Fahrrades für Beruf und Freizeit als auch beim sportlichen Einsatz. Ermüdungserscheinungen, verminderte Verkehrssicherheit und gesundheitliche Beeinträchtigungen bei häufigem Gebrauch sind die Folgen.

Der Erfindung liegt daher die Aufgabe zugrunde, einen Fahrradsattel so weiterzuentwickeln, daß die Verteilung des Körpergewichtes optimiert und die Seitenstabilität während der Fahrt mit einfachen Mitteln wesentlich verbessert werden.

Bei einem Sattel der eingangs umrissenen Bauart wird diese Aufgabe erfindungsgemäß durch die den kennzeichnenden Teil des Anspruchs 1 bildende Merkmalkombination gelöst.

Durch die Aufteilung des Sattels in einen großflächigen, anpassungsfähigen Sitz und eine davon getrennte Lenkstütze werden eine wesentlich günstigere Gewichtsverteilung sowie ein besseres Lenkverhalten erreicht.

Die Lenkstütze kann aus einem länglichen Körper bestehen, dessen Längserstreckung in Fahrtrichtung liegt.

Die erfindungsgemäß vorgesehene Lenkstütze wird bei der Fahrt von den beiden Oberschenkeln des Fahrers umschlossen, wodurch sie Seitenführungskräfte übernehmen und dem Körper auf dem Sitz eine sichere und drehungsfreie Position verleihen, ohne daß das gewohnte Fahr- und Lenkgefühl auf dem Fahrrad beeinträchtigt wird. Dem Gesamtsystem Zweirad - Fahrer wird durch den erfindungsgemäß ausgebildeten Fahradsattel eine gegenüber dem Stand der Technik wesentlich bessere Richtungsstabilität verliehen.

Es ist vorteilhaft, wenn die Lenkstütze am Stützrahmen des Sitzes angebracht ist, wodurch sich Herstellung und Montage sehr einfach gestalten.

Nach einem bevorzugten Merkmal der Erfindung ist der Abstand zwischen der Lenkstütze und dem Sitz einstellbar und kann somit an die Körpermaße des jeweiligen Fahrers angepaßt werden. Ebenfalls ist es vorteilhaft, wenn die Lenkstütze um eine horizontale Achse verschwenkt werden kann, so daß auch die Höhe relativ zum Sitz auf ein optimales Maß eingestellt werden kann.

Es ist besonders günstig, wenn der Sitz in der Mitte seiner Vorderkante eine Aussparung aufweist, die vor allem für männliche Fahrer anatomisch sehr vorteilhaft ist und in die bei Bedarf die Lenkstütze verschoben werden kann.

Nach einem anderen Merkmal der Erfindung ist an der Unterseite des Sitzes ein Ventil zum Einbringen von Hartschaum vorgesehen, um auf diese Weise die Härte und Elastizität des Sitzes wählen zu können.

Die Erfindung ist nachstehend an einem Ausführungsbeispiel erläutert, das in der Zeichnung dargestellt ist. Es zeigen:
Figur 1 eine Seitenansicht eines Fahrradsattels gemäß der Erfindung und
Figur 2 eine Draufsicht des in Figur 1 gezeigten Fahrradsattels.

Die beiden Figuren zeigen einen insgesamt mit 10 bezeichneten Sattel für ein Zweirad, insbesondere ein Fahrrad, der gemäß der Erfindung aus einem elastischen Sitz 12 und einer Lenkstütze 14 besteht. Der Sitz 12 hat eine gegenüber herkömmlichen Sitzen wesentlich breitere Abstützfläche nach Art eines Stuhles, auf der das Gesäß des Fahrers ruht. An seiner Vorderkante hat der Sitz 12 eine Aussparung 34, so daß die Grundfläche des Sitzes 12 etwa die Form eines U aufweist. Der Sitz 12 ist an zwei symmetrisch zur Längsachse 16 liegenden Punkten 18 im Bereich seiner Vorderkante auf einem Stützrahmen 20 gelagert, welcher in bekannter Weise höhenverstellbar auf einem Rohr 22 des Rahmens befestigt ist. Der hintere Teil des Sitzes 12 stützt sich in der Mitte über eine Feder 24 auf dem Stützrahmen 20 ab.

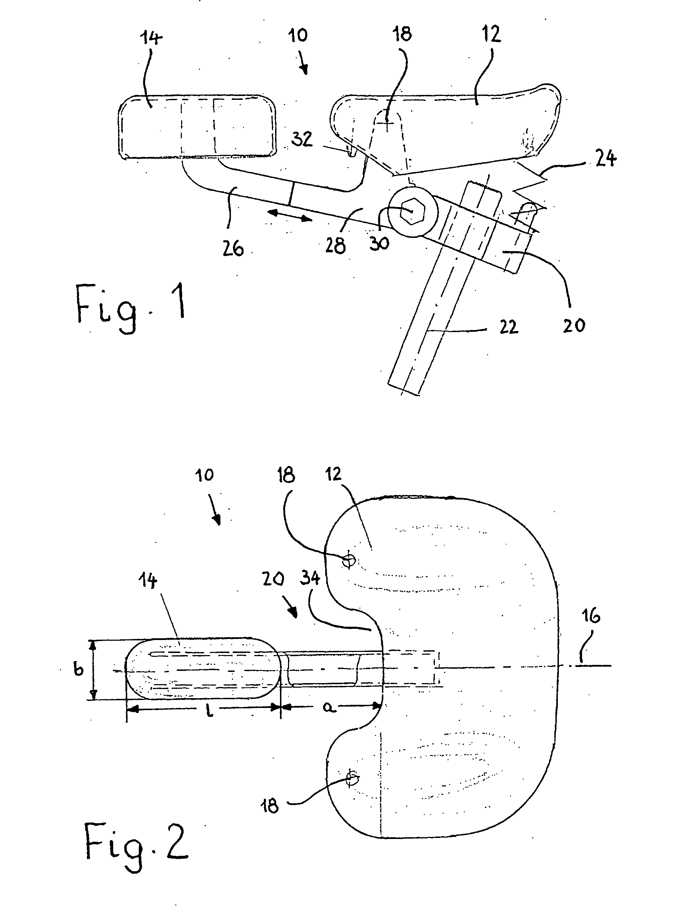

Wie insbesonder Figur 2 zeigt, ist die Längsstütze 14 als ein länglicher Körper ausgebildet, dessen Längserstreckung in Fahrtrichtung liegt. Die Lenkstütze 14 ist am oberen Ende auf einem Winkelrohr 26 befestigt, das am vorderen Teil 28 des Stützrahmen 20 befestigt ist. In Figur 1 ist angedeutet, daß es günstig ist, wenn das Winkelrohr 26 beispielsweise durch eine Teleskopverbindung am vorderen Teil 28 des Stützrahmens 20 angebracht ist, so daß der Abstand a zwischen der Lenkstütze 14 und dem Sitz 12 eingestellt werden kann. Dieser Abstand a liegt im allgemeinen in der Größenordnung von 80 mm.

In Figur 1 ist ferner zu erkennen, daß der vordere Teil 28 des Stützrahmens 20 um eine horizontale Achse 30 verschwenkt werden kann, so daß auch die Höhe der Lenkstütze 14 relativ zum Sitz 12 in gewissen Grenzen eingestellt werden kann.

Figur 1 zeigt, daß an der Unterseite des Sitzes 12 ein Ventil 32 vorgesehen ist, über welches Hartschaum eingespritzt werden kann, um die Härte und Elastizität des Sitzes 12 einstellen zu können.

Versuche haben ergeben, daß als optimale Abmessungen für die Lenkstütze 14 eine Länge 1 von etwa 120 mm und eine Breite b von etwa 50 mm gewählt werden können.

## Patentansprüche

1. Sattel für Zweiräder, insbesondere Fahrräder, mit einem Sitz (12), der über einen Stützrahmen (20) höhenverstellbar an einem Rahmen befestigt ist, an welchem in Fahrtrichtung vor dem Sitz (12) eine Lenkstütze (14) befestigt ist, die aus einem länglichen Körper besteht, dessen Längserstreckung in Fahrtrichtung liegt, die im wesentlichen in Höhe des Sitzes (12) liegt, und die um eine horizontale Achse (30) schwenkbar und in der gewählten Winkelposition fest einstellbar ist **dadurch gekennzeichnet, daß** der Abstand (a) zwischen der Lenkstütze (14) und dem Sitz (12), der eine breite Abstützfläche für das Gesäß des Fahrers und in der Mitte seiner Vorderkante eine Aussparung (34) aufweist, einstellbar ist.

2. Sattel nach Anspruch 1, **dadurch gekennzeichnet, daß** an der Unterseite des Sitzes (12) ein Ventil (32) zum Einbringen von Hartschaum vorgesehen ist.

3. Sattel nach Anspruch 1 oder 2, **dadurch gekennzeichnet, daß** sich der Sitz (12) mit seinem hinteren Teil über eine Feder (24) auf dem Stützrahmen (20) abstützt.

## Claims

1. Saddle for double-wheeled vehicles, in particular bicycles, comprising a seat (12) fastened by means of a support (20) to a frame such that it may be vertically adjusted, to which frame in front of the seat a steering rest (14) is fixed defined by an oblong body whose longitudinal axis extends in the moving direction, said steering rest (14) being positioned substantially at the vertical level of said seat (12) and being pivatably mounted on a horizontal axis (30) such that the desired angular position may be locked, **characterized in that** the distance (a) between the steering rest (14) and the seat (12) may be adjusted, said seat (12) having a large platform for the support of the rider's bottom and a recess (34) in the central portion of its leading edge.

2. Saddle according to claim 1, wherein to the lower side of the seat (12) a valve (32) is mounted through which rigid expanded plastics may be injected.

3. Saddle according to claim 1 or 2, wherein the rear part of said seat (12) is resting on said support (20) by means of a spring (24).

## Revendications

1. Selle pour un véhicule à deux roues, particulièrement pour une bicyclette, comprenant un siège (12) attaché à un cadre possédant un support de fixation (20) réglable en hauteur et sur lequel est fixé, devant le siège (12), un support de direction (14) constitué par un corps oblong dont l'axe longitudinal s'étend dans le sens de la marche, ledit support de direction (14) se trouvant plus ou moins au niveau du siège (12) et pivotant sur un axe horizontal (30) pour pouvoir être fixé dans la position angulaire désirée, **caractérisée par le fait que** la distance (a) entre le support de direction (14) et le siège (12) peut être réglée, le siège (12) présentant une large surface d'appui pour les fesses du cycliste et un évidement (34) pratiqué dans la partie centrale de son bord antérieur.

2. Selle selon la revendication 1, **caractérisée par le fait que** la face inférieure du siège (12) présente une valve (32) pour l'injection d'une mousse dure.

3. Selle selon la revendication 1 ou 2, **caractérisée par le fait que** la partie postérieure du siège (12) s'appuie sur le support de fixation (20) au moyen d'un ressort (24).
